**Europäisches Patentamt**

(19) **European Patent Office**

**Office européen des brevets**

(11) Veröffentlichungsnummer: **0 012 186**
**B1**

(12) # EUROPÄISCHE PATENTSCHRIFT

(45) Veröffentlichungstag der Patentschrift:
13.04.83

(51) Int. Cl.³: **G 06 F 1/04**

(21) Anmeldenummer: **79104111.4**

(22) Anmeldetag: **23.10.79**

(54) **Einrichtung zur Erzeugung von Taktsteuersignalen.**

(30) Priorität: **12.12.78 DE 2853523**

(43) Veröffentlichungstag der Anmeldung:
**25.06.80 Patentblatt 80/13**

(45) Bekanntmachung des Hinweises auf die Patenterteilung:
**13.04.83 Patentblatt 83/15**

(84) Benannte Vertragsstaaten:
**BE CH DE FR GB NL SE**

(56) Entgegenhaltungen:
**US-A-3 351 918**
**US-A-3 566 364**
**US-A-3 656 123**
**US-A-3 725 793**

(73) Patentinhaber: **International Business Machines Corporation, Armonk, N.Y. 10504 (US)**

(72) Erfinder: **Blum, Arnold, Finkenweg 16, D-7261 Gechingen (DE)**

(74) Vertreter: **Teufel, Fritz, Dipl.-Phys., Schönaicher Strasse 220, D-7030 Böblingen (DE)**

Einrichtung zur Erzeugung von Taktsteuersignalen

Die Erfindung betrifft eine Einrichtung zur Erzeugung von Signalen zur zeitlichen Steuerung nach dem Oberbegriff von Anspruch 1.

In Systemen zur digitalen Informationsverarbeitung werden zur Steuerung der einzelnen Verarbeitungsschritte eine Vielzahl von Steuersignalen benötigt, mit denen die einzelnen Verarbeitungselemente (Register, Verknüpfungsschaltungen usw.) in einer genau festgelegten Reihenfolge aktiviert werden. Diese sog. Taktsteuersignale werden im Stand der Technik bei synchronen Verarbeitungswerken zentral erzeugt und an die einzelnen Baugruppen verteilt. Die Taktsteuersignale werden dabei aus den Zeitsignalen eines Periodenzählers (T-Ring) durch logische Verknüpfung mit Funktionssteuersignalen (Programmbefehlen und Systemzustandsanzeigern) erzeugt; die T-Ringe ihrerseits werden durch periodische Taktsignale eines Oszillators fortgeschaltet. Bei der Verteilung der Taktsteuersignale an die Verbraucher müssen Verzerrungen und Laufzeitunterschiede gering gehalten werden, dazu werden im Stand der Technik gleiche Leitungslängen oder Leitungen mit einstellbarer Verzögerung verwendet.

Die zentrale Erzeugung und Verteilung von Taktsteuersignalen ist wenig geeignet für Systeme, die aus modernen, hochintegrierten Schaltkreisplättchen (Chips) aufgebaut sind. Die Fortschritte der Schaltkreistechnologie ermöglichen es, immer mehr Funktionen in einem Chip zu integrieren und damit die Verarbeitungsgeschwindigkeit und die Transfergeschwindigkeit von einer logischen Stufe zur nächsten beträchtlich zu erhöhen. Die Taktfrequenz, mit der diese Schaltungen arbeiten können, liegt daher sehr hoch.

Die erreichbare Taktfrequenz beim Zusammenschalten mehrerer Chips zu einem System wird aber durch die dann notwendigen Verbindungen von einem Schaltkreisplättchen zum nächsten stark herabgesetzt. Ein maßgeblicher Faktor hierfür sind die Laufzeiten von zentral erzeugten Steuersignalen: Die großen Leitungslängen und die Vielzahl der durchlaufenen logischen Stufen mit jeweils individueller Verzögerung (Chip-abhängig) begrenzen die mögliche Taktfrequenz des Gesamtsystems nach Maßgabe des Signalweges mit der längsten Verzögerung. Zur Illustration sei erwähnt, daß typische Verzögerungen zwischen zwei logischen Stufen auf einem Chip bei modernen Technologien im Bereich einiger Nanosekunden liegen, während alleine die Verzögerung der Treiber für Leitungen zu benachbarten Chips in der Größenordnung einiger 10 Nanosekunden liegen.

Ein weiterer wesentlicher Gesichtspunkt bei modernen Verarbeitungssystemen betrifft die Anzahl der für jedes Chip verfügbaren Anschlußpunkte; diese ist durch Größe und Umfang des Schaltkreisplättchens im wesentlichen vorgegeben. Wenn die logische Kapazität bei Erhöhung der Schaltkreisdichte wirksam ausgenutzt werden soll, müssen auch die auf einem Schaltkreisplättchen ausgeführten Funktionen so gewählt werden, daß die erforderliche Anzahl von Anschlußpunkten möglichst gering gehalten wird.

Zum Aufbau komplexer Systeme aus hochintegrierten Schaltkreisplättchen wurde im Stand der Technik schon angegeben, mehrere unabhängig und asynchron arbeitende Untersysteme aus jeweils einem Schaltkreisplättchen miteinander zu koppeln (deutsche Offenlegungsschrift 2 457 553). Die asynchrone Arbeitsweise bedingt jedoch einen hohen Verwaltungsaufwand der Steuereinheit. Wenn die Schaltkreisplättchen z. B. über eine gemeinsame Sammelleitung miteinander verbunden sind, muß bei jedem neuen Informationsaustausch eine Anforderungsprozedur zum Aufbau der Verbindung durchlaufen werden. Der Zeitaufwand dafür ist innerhalb eines Verarbeitungswerks oft nicht tragbar.

Die großen und unterschiedlichen Laufzeiten von Taktsteuersignalen spielen insbesondere bei mikroprogrammierten Systemen eine nachteilige Rolle und begrenzen die schaltungstechnisch an sich mögliche Erhöhung der Arbeitsfrequenz des Systems. Bei der Bearbeitung einer Mikroinstruktion fällt die Verzögerung durch die Verteilung zentral erzeugter Taktsteuersignale immer mehr ins Gewicht und wird zum bestimmenden Faktor für die Begrenzung der Geschwindigkeit; diese Rolle spielten früher die Zykluszeit des Steuerspeichers und die Verzögerung der logischen Stufen.

Die Erfindung stellt sich daher die Aufgabe, eine Einrichtung zur Erzeugung von Taktsteuersignalen in einem synchron arbeitenden System anzugeben, die den Charakteristiken hochintegrierter Schaltkreisplättchen angepaßt ist.

Diese Aufgabe wird durch die im Hauptanspruch gekennzeichnete Erfindung gelöst; Ausgestaltungen der Erfindung sind in den Unteransprüchen gekennzeichnet.

Die Erfindung schlägt dazu vor, jedes der synchron arbeitenden Schaltkreisplättchen mit einem eigenen Zeitsignalgeber auszustatten, die untereinander genau synchron arbeiten; die Taktsteuersignale für jedes Schaltkreisplättchen werden dann von dem jeweiligen Zeitsignalgeber abgeleitet.

Durch die dezentrale Erzeugung der Taktsteuersignale entfällt die Verzögerung beim Übergang von einem Chip zum nächsten und der sonst notwendige Abgleich der Leitungen. Die Verzögerung der Taktsteuersignale auf jedem Chip entspricht außerdem genau den sonst für dieses Chip maßgeblichen Signalverzögerungen; es braucht somit für dieses Chip nicht die gesamte Variationsbreite der Verzögerungen verschiedener Chips berücksichtigt werden. Die Anzahl der notwendigen Anschlußpunkte für die Chips vermindert sich. Bei auftretenden Fehlern kann die Ursache verhältnismäßig einfach durch die Anzeige des jeweiligen Standes der einzelnen Zeitsignalgeber ermittelt werden. Insgesamt liefert die Erfindung ein einfaches System zur Erzeugung und Verteilung von Taktsteuersignalen; der Aufwand dafür beträgt nur einige zusätzliche, bei hochintegrierten Schaltungen praktisch vernachlässigbare Schaltelemente pro Chip.

Ein Ausführungsbeispiel der Erfindung wird nun anhand von Zeichnungen näher erläutert. Es zeigt

Fig. 1A ein vereinfachtes System zur Ausführung einer Mikroinstruktion nach dem Stand der Technik mit mehreren Schaltkreisplättchen,

Fig. 1B ein Zeitdiagramm für die Taktsteuersignale zur Ausführung einer bestimmten Mikroinstruktion im System nach Fig. 1A,

Fig. 2 Einzelheiten einer Registerstufe im System nach Fig. 1A,

Fig. 3A Einzelheiten der Einrichtung zur Erzeugung von Taktsteuersignalen nach dem Stand der Technik,

Fig. 3B die Taktsteuersignale des Systems nach Fig. 1A und deren unvermeidliche Verzögerung,

Fig. 4 die schematische Darstellung eines mikroprogrammierten Systems mit dezentraler Erzeugung von Taktsteuersignalen,

Fig. 5 Einzelheiten einer Registerstufe im System nach Fig. 4.

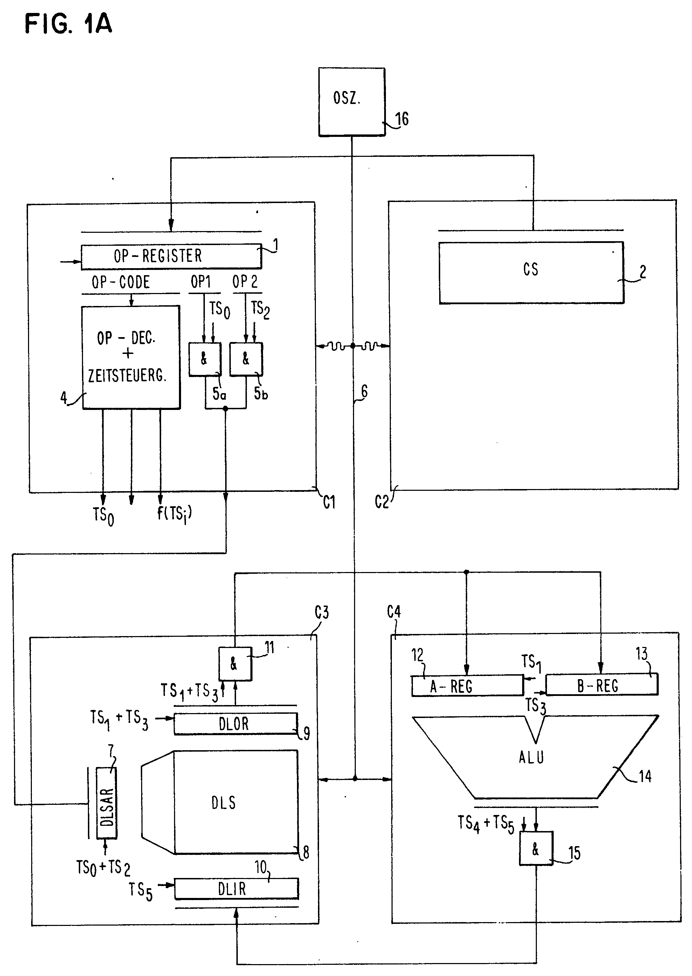

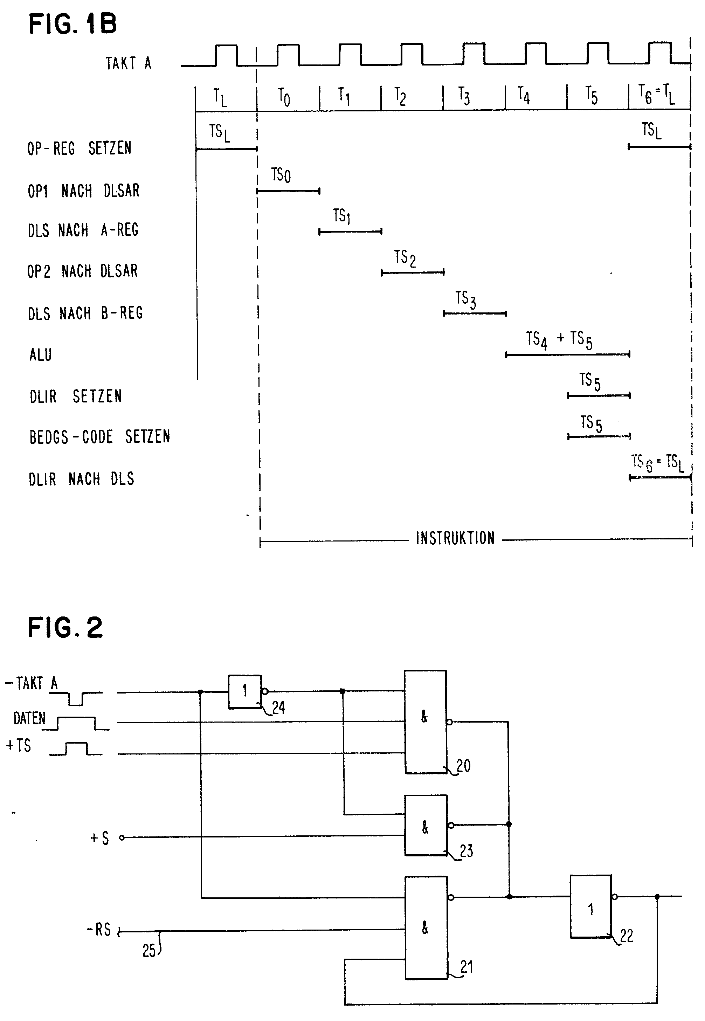

Anhand der Fig. 1 bis 3 wird zuerst ein System zur digitalen Informationsverarbeitung nach dem Stand der Technik beschrieben und erläutert, welche Schwierigkeiten bei der Erzeugung und Verteilung von Taktsteuersignalen bestehen. Die Funktionsweise dieses Systems wird am Beispiel einer einfachen (Mikro-) Instruktion erläutert, mit der zwei in Registern R1, R2 enthaltene Operanden in einem Rechenwerk addiert werden und das Ergebnis in den Speicherplatz des zweiten Operanden zurückgeschrieben wird (Instruktionscode ADD R1, R2).

Die für diesen Vorgang notwendigen Elemente sind in Fig. 1A dargestellt. Die Taktsteuersignale zur Durchführung dieser Instruktionen zeigt Fig. 1B.

Die Bearbeitung einer Instruktion in einem digitalen System erfordert mehrere hintereinander ablaufende Schritte. Diese unter sich gleichlangen Zeitabschnitte sind in Fig. 1B mit $T_0$ bis $T_L$ (für letzte Zeit) bezeichnet. In dem genannten Beispiel werden maximal sieben Zeitabschnitte benötigt; einzelne Instruktionen können auch weniger als sieben Zeitabschnitte in Anspruch nehmen. Die Zeitabschnitte $T_0$ bis $T_L$ werden durch zyklische Signale (Zeitsignale) eines Ringzählers oder eines umlaufenden Schieberegisters (T-Ring) erzeugt. Die für jede Mikroinsruktion charakteristischen Taktsteuersignale, entsprechend der Darstellung in Fig. 1B, werden erzeugt, indem die Zeitsignale des T-Rings mit Ausgangssignalen des Decodierwerks für den Operationscode kombiniert werden. Dadurch entstehen die sog. Taktsteuersignale TS, mit denen die Elemente des Systems (Register, Verarbeitungseinheiten usw.) und die dazwischenliegenden Datenwege bei der Ausführung einer Instruktion gesteuert werden.

Die Zeitabschnitte $T_0$ bis $T_L$ liegen bezüglich der Taktsignale eines Taktgebers OSZ16 fest; in einem Ausführungsbeispiel erscheinen die Taktsignale (Takt A, Fig. 1B) immer gerade in der Mitte der Zeitabschnitte $T_i$. Der eigentliche Datentransfer, z. B. das Übernehmen von Daten in ein Register erfolgt innerhalb eines Zeitabschnittes $T_i$, wenn gleichzeitig das Taktsignal A anliegt.

In Fig. 1A sind schematisch die Elemente eines Prozessors dargestellt, die zur Ausführung der Instruktion ADD R1, R2 erforderlich sind; die Arbeitsweise des Systems wird in Zusammenhang mit dem Diagramm der Taktsteuersignale in Fig. 1B erläutert.

In der letzten Phase der vorhergehenden Instruktion (Zeitabschnitt $T_L$) wird das Operationsregister OP-REG 1 aus einem Steuerspeicher CS 2 geladen. Zum Zeitpunkt $T_0$ der hier betrachteten Instruktion ADD R1, R2 ist der Operationscode OP-Code aus diesem Register schon ausgelesen und der Einheit 4 zugeführt, die den Operationscode decodiert und die Taktsteuersignale $TS_0$ bis $TS_L$ erzeugt. Im Zeitabschnitt $T_0$ ist für die Instrktion ADD R1, R2 das Taktsteuersignal $TS_0$ mit der Bedeutung »Setze Operandenadresse OP1 in Register DLSAR« erzeugt. Dadurch wird das UND-Glied 5a geöffnet und der Abschnitt OP1 des OP-Registers 1 in das Adreßregister DLSAR 7 eines lokalen Datenspeichers DLS 8 eingelesen. Zur Zeit T1 wird mit Hilfe des Taktsteuersignals $TS_1$ der Speicher DLS 8 über dessen Ausgangsregister DLOR 9 ausgelesen und der betreffende Speicherinhalt über das ebenfalls durch $TS_1$ geöffnete UND-Glied 11 in ein A-Register 12 gegeben. In entsprechender Weise wird mit Hilfe der Taktsteuersignale $TS_2$ und $TS_3$ der mit der Operandenadresse OP2 bezeichnete Inhalt des Speichers DLS in ein B-Register 13 gegeben. Die Verknüpfung der Registerinhalte A und B in einer arithmetischen und logischen Einheit ALU 14 erfolgt mit den Taktsteuersignalen $TS_4$ und $TS_5$; zur Zeit $T_5$ wird das Ergebnis in das Eingangsregister DLIR 10 des Speichers DLS geschrieben. Dazu wird die Torschaltung 15 geöffnet. Ebenfalls im Zeitabschnitt $T_5$ wird mit dem Taktsteuersignal $TS_5$ der Bedingungscode gesetzt; im letzten Zeitabschnitt $T_L$ wird mit dem Taktsteuersignal $TS_L$ der Inhalt des Registers DLIR in den Speicher an die Adresse OP2 (die noch im Register DLSAR enthalten ist) zurückgeschrieben und die nächste Instruktion aus dem Steuerspeicher CS2 ausgelesen.

Die Blöcke C1 bis C4 in Fig. 1A deuten an, wie die Elemente des Prozessors auf verschiedene Schaltkreisplättchen verteilt sein können. Die Taktsteuersignale $TS_0$ bis $TS_N$ sowie Funktionen $f(TS_i)$ dieser Taktsteuersignale werden also auf Chip $C_1$ erzeugt und müssen den Chips C3 und C4 über Treiber und externe Verbindungen zugeführt werden. Neben den Taktsteuersignalen $TS_i$ werden den einzelnen Elementen über abgestimmte Leitungen 6 (durch gewellte Abschnitte angedeutet) auch noch Taktsignale Takt A eines Taktgebers OSC 16 zugeführt. Die Funktion der verschiedenen Signale zur zeitlichen Steuerung wird am Beispiel einer Registerstufe erläutert, die in Fig. 2 dargestellt ist.

Fig. 2 zeigt eine Registerstufe, aus denen die in Fig. 1 gezeigten Register A, B usw. aufgebaut sind. Es handelt sich um im Stand der Technik bekannte zustandsgesteuerte Stufen des Typs D-Flipflop. Der Ausgang des NAND-Glieds 20 wird über das Inverter-Glied 22 und das daran über eine Rückkopplungsleitung angeschlossene NAND-Glied 21 verriegelt, wenn das invertierte Taktsignal Takt A in den logischen Wert 1 übergeht. Die Verriegelung bleibt so lange bestehen, wie das invertierte Taktsignal Takt A den logischen Wert 1 aufweist. Damit die am NAND-Glied 20 anliegenden Daten verriegelt werden, müssen dort also gleichzeitig die Daten, das Taktsteuersignal TS und das (durch Inverterglied 24) verzögerte Signal » + Takt A« vorliegen. Das NAND-Glied 23 und die Leitung 25 dienen zum Rückstellen (Leitung 25 niederpegelig — RS) bzw. Setzen (Leitung 26 hochpegelig + S) der Verriegelungsschaltung.

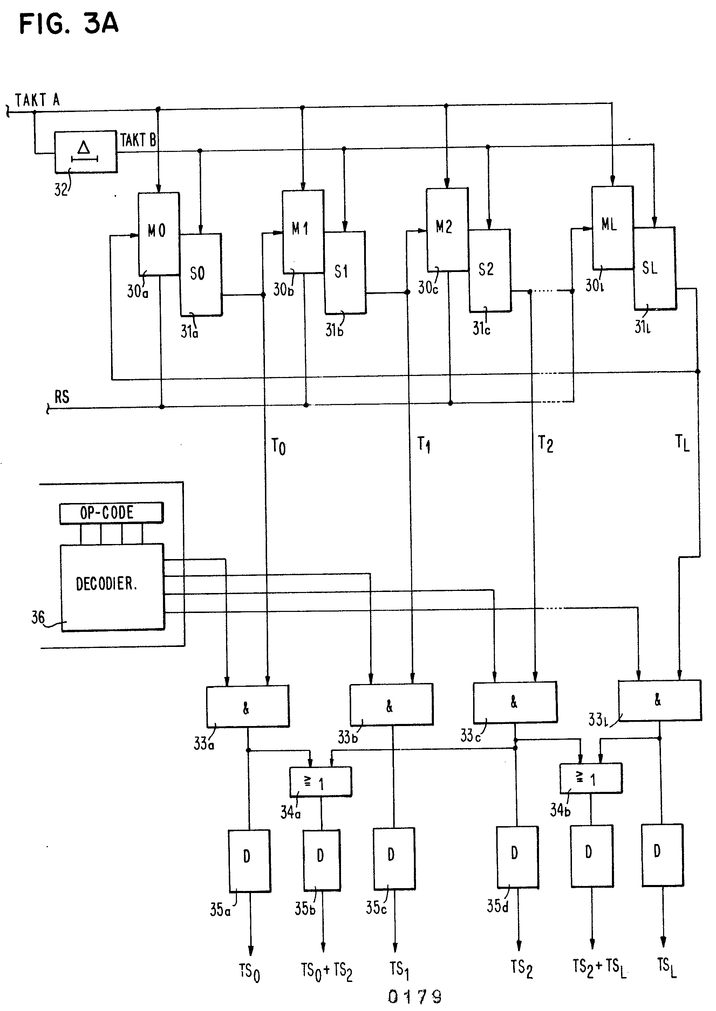

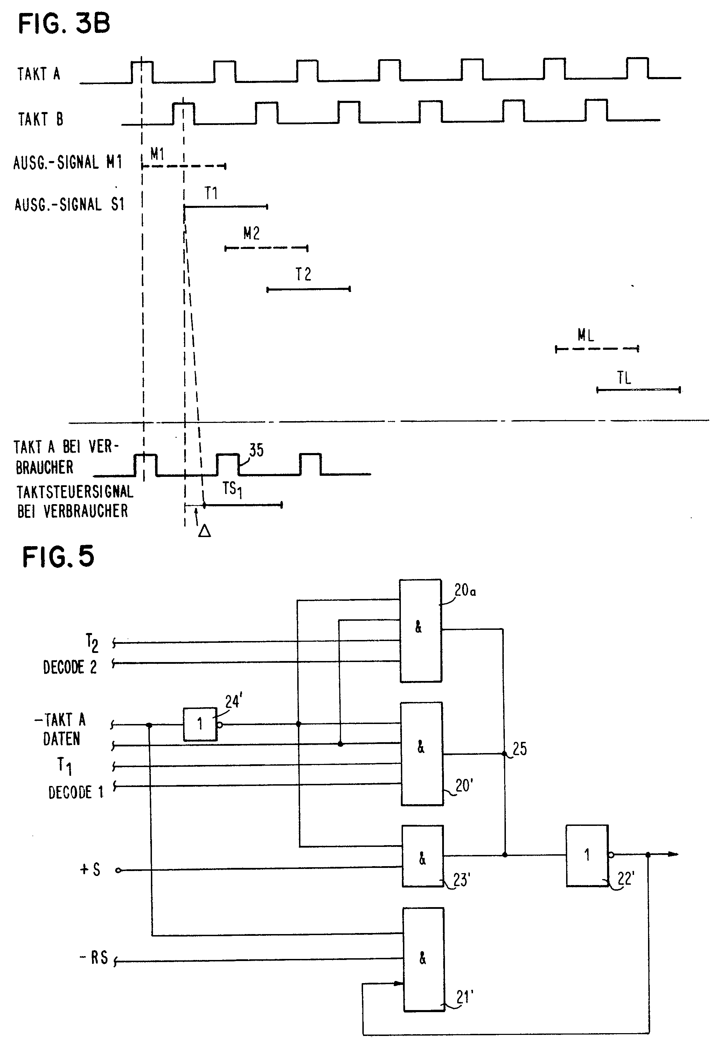

Die zum Umschalten des D-Flipflops in Fig. 2 erforderliche Koinzidenz der Signale »Takt A«, »Daten« und Taktsteuersignal TS wird bei zentraler Erzeugung der Taktsteuersignale mit nachfolgender Verteilung gefährdet, wenn die Frequenz des Taktgebers (Takt A) erhöht wird, um die Schaltgeschwindigkeit hochintegrierter Chips auszunutzen. Zur genaueren Darstellung wird in Fig. 3A die Erzeugung der Zeitsignale $T_0$ bis $T_L$ und die Erzeugung der Taktsteuersignale TS0 bis TSL beschrieben. Die Fig. 3B zeigt die relative Lage dieser verschiedenen Zeitsignale.

Die Zeitsignale $T_0$ bis $T_L$, die das eigentliche instruktionsspezifische Zeitraster für die Ausführung einer Mikroinstruktion bilden, werden durch eine Verzögerungskette aus den periodischen Taktsignalen einer Taktgeberschaltung abgeleitet, die beispielsweise aus einem Oszillator und einer nachgeschalteten Impulsformerstufe besteht. Im Beispiel der Fig. 3A ist die Verzögerungskette als Reihenschaltung von sog. Herren-Sklave-Flipflops (master-slave-flipflop) dargestellt. Jedes dieser Elemente besteht beispielsweise aus einem Paar von D-Flipflops, ähnlich der in Fig. 2 dargestellten Art. Die Ausgangssignale jeder Stufe werden als Eingangssignale der nächsten zugeführt; das Ausgangssignal der letzten Stufe wirkt als Eingangssignal für die erste Stufe. Mit Hilfe einer Rücksetzleitung RS wird das Master-Flipflop der letzten Stufe auf logisch 1 gesetzt, alle anderen Stufen auf 0. Werden den Master-Flipflops M0 bis ML die Signale des Taktgebers (Takt A) zugeführt und den Slave-Flipflops S die in einem Verzögerungsglied 32 verzögerten Taktsignale (Takt B), so wird die in der letzten Stufe enthaltene logische 1 zyklisch durch die Kette vorgeschaltet (nach Art eines rückgekoppelten Schieberegisters). Am Ausgang der Slave-Flipflops können dann die gewünschten Zeitsignale $T_0$ bis $T_L$ abgenommen werden. Eine derartige Einrichtung zur Erzeugung der Zeitsignale $T_i$ stellt den früher erwähnten T-Ring dar. Andere Schaltungen zur Erzeugung der Zeitsignale $T_i$ sind beispielsweise binäre Modulo-Zähler.

Die Zeitsignale $T_0$ bis $T_L$ müssen nun je nach der gerade auszuführenden Instruktion den Verknüpfungsschaltungen und Registern des Prozessors zugeführt werden. Zur Erzeugung der Taktsteuersignale TS1 bis TSL werden die Zeitsignale $T_0$ bis $T_L$ instruktionsspezifisch mit Signalen verknüpft, die dem Decodierwerk für den OP-Code entnommen werden. Diese Verknüpfung ist schematisch durch die Verknüpfungsglieder 33 dargestellt. Die Decodiereinrichtung für den OP-Code ist durch das Schaltelement 36 symbolisiert.

Neben den einfachen Taktsteuersignalen $TS_i$ werden für einige Elemente auch kompliziertere Taktsteuersignale benötigt, z. B. wenn ein Element während mehrerer Zeitabschnitte $T_i$ aktiv ist. Beispiele hierfür sind in Fig. 1A die ALU 14, die UND-Glieder 11, 15 und das Register DLSAR. Derartige Verknüpfungen von Taktsteuersignalen werden beispielsweise durch die ODER-Glieder 34a, 34b in Fig. 3A erzeugt. Die Taktsteuersignale werden dann über entsprechende Treiberschaltungen D 35 (die ggf. auch für mehrere Taktsteuersignale gemeinsam benutzt werden können) an die gesteuerten Elemente gegeben.

Die Verzögerungen in den Verknüpfungselementen 33, 34, den Leitungen, auf denen die Signale $TS_i$ zu den Verbrauchern gebracht werden und den Leitungstreibern D haben zur Ursache, daß die Taktsteuersignale mit einer Verschiebung $\Delta$ (Fig. 3B) bei den Verbrauchern (z. B. Registerstufen) ankommen. Der Teil von Fig. 3B oberhalb der strich-punktierten Linie zeigt die relative Lage der Eingangs- und Ausgangsimpulse des T-Ringes in Fig. 3A; die Verzögerung des Taktsteuersignals $TS_1$ am Ort des Verbrauchers bezüglich der Lage des Taktsignals Takt A ist im unteren Teil der Fig. 3B dargestellt. Nach Fig. 2 muß zum Durchschalten beispielsweise des Verknüpfungsgliedes 20 Koinzidenz des Taktsteuersignals TS mit dem entsprechenden Impuls des Taktsignals »Takt A« vorliegen. Die Verzögerung $\Delta$ darf also nicht so groß sein, daß dieses Taktsignal 35 angeschnitten wird. Sind umgekehrt die Verzögerungen der Taktsteuerimpulse groß, bleibt keine andere Wahl, als die Frequenz des Oszillatorsignals Takt A herabzusetzen; damit wird aber die eigentliche, durch die Schaltkreistechnologie ermöglichte Arbeitsfrequenz des gesamten Systems nicht voll ausgenützt. Im anderen Fall können sog. metastabile Zustände auftreten, bei denen ein Register beispielsweise gesetzt wird, die Überlappung der Ansteuerimpulse jedoch nicht ausreicht, um das Register zu verriegeln. Dieser unbestimmte Zustand führt somit zu Fehlerbedingungen, deren Beseitigung zusätzliche Schaltmittel erforderlich macht.

Der früher bestehende Engpaß für die erreichbare Taktfrequenz, nämlich die Verzögerung der Daten in den logischen Stufen, spielt durch die Erhöhung der Funktionsdichte und er internen Arbeitsgeschwindigkeit auf den Schaltkreisplättchen nicht mehr die ausschlaggebende Rolle.

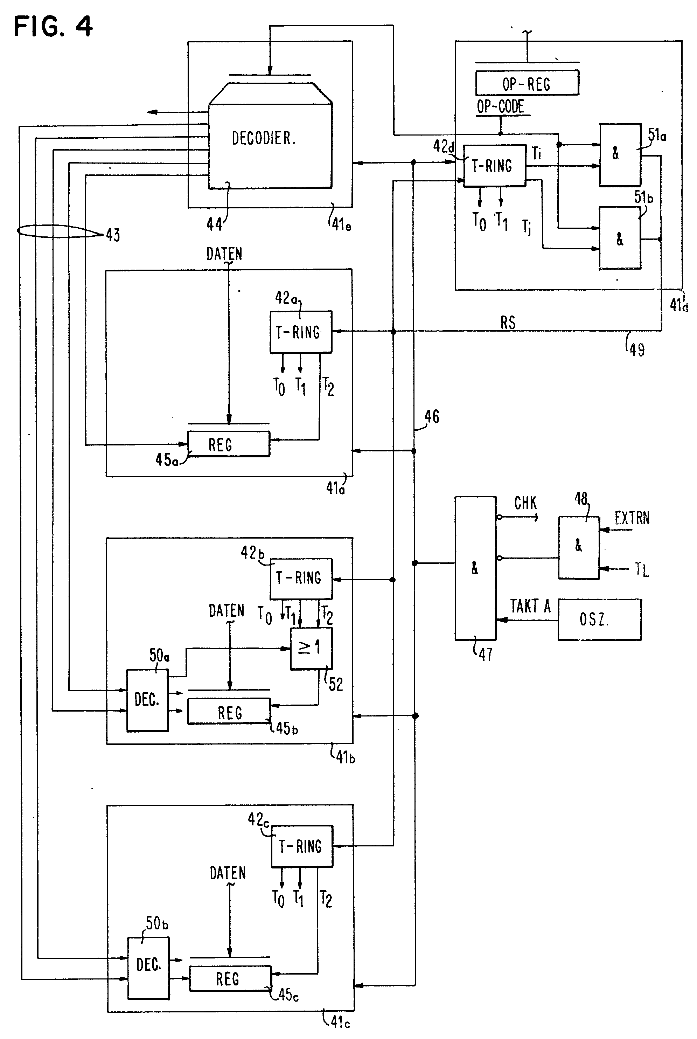

In Fig. 4 ist schematisch ein datenverarbeitendes System dargestellt, in dem derartige Zeitverluste die erreichbare Arbeitsfrequenz nicht beeinträchtigen können. Auf jedem der Schaltkreisplättchen 41a bis d, deren Schaltungen Taktsteuersignale $TS_i$ benötigen, ist ein eigener T-Ring 42a, 42b, 42c, 42d angeordnet. Die von diesen T-Ringen erzeugten Zeitsignale $T_0$ bis $T_L$ werden direkt den Steuerpunkten (z. B. Registerstufen REG 45a, b) auf dem Chip zugeführt. Die weitere Information, die zur Bildung eines Taktsteuersignals aus den Zeitsteuersignalen erforderlich ist, wird den Steuerpunkten auf den einzelnen Chips beispielsweise über Leitungen 43 aus dem zentralen Decodierwerk 44 für den Operationscode OP-Code zugeführt.

Werden an einem Steuerpunkt Taktsteuersignale benötigt, die logische Funktionen von Zeitsignalen $T_i$ sind, so durchlaufen die Zeitsignale des lokalen T-Rings eine auf demselben Schaltkreisplättchen angeordnete Verknüpfungsschaltung. Ein Beispiel ist das ODER-Glied 52 auf Chip 41 mit den Eingängen $T_1$ und $T_2$.

Den Aufbau einer derart gesteuerten Registerstufe zeigt Fig. 5. Die Registerstufe mit den Elementen 20' bis 24' ist identisch zu der in Fig. 2 dargestellten, mit der Ausnahme, daß kein einzelnes Taktsteuersignal TS zugeführt wird, sondern zwei getrennte Signale, das Zeitsignal $T_1$ und ein Signal des Decodierers für den OP-Code (Decode 1).

Das zusätzliche UND-Glied 20a ist für den Fall vorgesehen, daß kompliziertere Taktsteuersignale erforderlich sind. Wenn dem Register in Fig. 2 ein Taktsteuersignal TS zugeführt werden mußte, das durch Verknüpfung mehrere Zeitsignale $T_i$ entstand, waren zusätzliche Verknüpfungsglieder erforderlich, z. B. die ODER-Glieder 34A, 34B in der zentralen Einrichtung zur Erzeugung von Taktsteuersignalen. Diese Glieder können entsprechend der obigen Beschreibung auf dem Chip selbst angeordnet werden, oder aber ganz entfallen, wenn die Registerstufe in Fig. 5 durch das weitere UND-Glied 20a ergänzt wird. Dieses Glied übernimmt beispielsweise die Daten, wenn das Zeitsignal T2 und ein weiteres Decodiersignal (Decode 2) vorliegen; der Ausgang des Gliedes 20a ist an den Ausgang des UND-Gliedes 20' über eine Phantom-ODER-Verbindung 27 angeschlossen.

Da die Taktsteuersignale nach Fig. 4 von Schaltungen erzeugt werden, die genau dieselben Eigenschaften wie die gesteuerten Kreise aufweisen (gleiche Verzögerungszeit pro Stufe usw.), ist die Verzögerung bis zum Eintreffen an den Steuerpunkten sehr gering; außerdem braucht bei der Konstruktion des Systems nur auf die Verzögerung des individuellen Chips Rücksicht genommen zu werden, nicht aber auf den denkbar schlechtesten Fall, der eintreten kann, wenn mehrere Chips mit verschiedenen Eigenschaften zusammengeschaltet werden.

Die Steuersignale, die vom Decodierwerk für den OP-Code erforderlich sind, spielen für die Verzögerung keine Rolle, da sie während der ganzen Ausführung einer Instruktion an den Steuerpunkten anstehen. Die teilweise Überlappung der Instruktionsausführung, die in Fig. 1B dargestellt ist (Auslesen und Decodieren während der letzten Phase der vorhergehenden Instruktion) gewährleistet, daß diese Steuersignale zu Beginn der Instruktionsausführung verfügbar sind.

Die Synchronität der einzelnen T-Ringe ergibt sich zwangsläufig daraus, daß allen der gleiche Impulszug Takt A eines Oszillators OSZ zugeführt wird; die Zuführungsleitungen 46 dieser Taktsignale zu den einzelnen Schaltkreisplättchen sind so aufeinander abgestimmt, daß sie alle genau dieselbe Verzögerung aufweisen. Zum synchronen Abschalten des Gesamtsystems wird zentral die Zuführung der Taktsignale Takt A unterbrochen. Dazu dienen die Verknüpfungsglieder 47 und 48: Bei einem externen Stoppsignal EXTERN wird die Zuführung der Taktsignale A nur zur Phase $T_L$ der gerade ausgeführten Instruktion unterbrochen. Ein Maschinenstoppsignal CHK führt zum sofortigen Unterbrechen der Taktsignale A.

Die anfängliche Synchronisierung der T-Ringe erfolgt durch ein Signal Zurücksetzen RS auf die Leitung 49, mit dem in allen Ringen der Zustand TL erzwungen wird. Dasselbe Signal »Zurücksetzen RS« wird auch bei der Ausführung solcher Instruktionen gegen, die weniger als die maximale Anzahl von Zeitsignalen $T_i$ benötigen. Sind beispielsweise zur Ausführung einer einfachen Operation nur vier Phasen (T0 bis T3) erforderlich, so wird diese Bedingung zur Zeit $T_i = T_2$ im Verknüpfungsblock 51a erkannt und über Leitung 49 das Rücksetzsignal RS an die T-Ringe ausgegeben. Der Verknüpfungsblock 51a stellt beispielsweise ein UND-Glied dar, dessen Eingängen das Zeitsignal $T_i$ und Teile des Operationscodes OP-Code zugeführt werden. Mit Beginn der Ausführungsphase der nächsten Instruktion stehen somit alle T-Ringe wieder in Stellung $T_0$. Entsprechendes gilt für andere Instruktionen mit anderer Anzahl von Zeitabschnitten $T_j$; für diese wird im Verknüpfungsglied 51b das Rücksetzsignal RS erzeugt.

Im fehlerfreien Betrieb weisen alle T-Ringe zu jedem Zeitpunkt genau die gleiche Stellung auf. Fehler, auch sporadische, können daher anhand des oder der abweichenden Stellungen der betroffenen T-Ringe festgestellt werden.

Eine weitere Verbesserung des in Fig. 4 dargestellten Systems besteht darin, die Decodierung des Operationscodes nicht an zentraler Stelle (Block 44) durchzuführen, sondern Decodiernetzwerke auf diejenigen Schaltkreisplättchen zu verteilen, auf denen sich die Steuerpunkte befinden. Der Hauptvorteil dieser verteilten Docidierung liegt in der Ersparnis von Anschlußpunkten der einzelnen Schaltkreisplättchen; anstelle der aufgefächerten, decodierten Steuersignale werden uncodierte oder partiell decodierte Steuersignale verwendet, die beträchtlich weniger Leitungen erfordern. Die zusätzlichen Decodiernetzwerke auf den Schaltkreisplättchen fallen bei hochintegrierten Schaltungen nicht ins Gewicht. In Fig. 4 sind mit dem Bezugszeichen 50a, 50b derartige verteilte Decodiereinrichtungen bezeichnet.

In einem weiteren Ausführungsbeispiel der Erfindung brauchen bei weniger kritischen Zeitanforderungen die T-Ringe nicht auf jedem der einzelnen Schaltkreisplättchen angeordnet sein; es kann dann ausreichen, nur einzelne ausgewählte Schaltkreisplättchen mit lokalen T-Ringen zu versehen und die Zeitsignale den benachbarten Plättchen über kurze Wege zuzuführen.

## Patentansprüche

1. Einrichtung zur Erzeugung von Signalen zur zeitlichen Steuerung (Taktsteuersignale) synchron arbeitender digitaler Schaltwerke mit mehreren Schaltkreisplättchen durch Verknüpfung der Ausgangssignale eines Zeitsignalgebers (T-Ring) mit Signalen, die Befehlsinformation enthalten, dadurch gekennzeichnet, daß in einem zur Ausführung von Mikroinstruktionen dienenden Schaltwerk mehrere oder alle Schaltkreisplättchen (41; fig. 4) jeweils einen eigenen T-Ring (42) zur Erzeugung lokaler Zeitsignale aufweisen, wobei alle T-Ringe von einem gemeinsamen Taktgeber (OSZ) synchron betrieben werden und daß den Schaltpunkten (z. B. Register 45) eines Schaltkreisplättchens die Zeitsignale des zugehörigen lokalen T-Rings sowie Steuersignale zugeführt werden, die durch Decodierung des ÖOP-Codes der Mikroinstruktion entstehen (OP-Code-Steuersignale).

2. Einrichtung nach Anspruch 1, dadurch gekennzeichnet, daß die Decodierung des Operationscodes der Mikroinstruktion an zentraler Stelle (44) des Verarbeitungswerks erfolgt und die OP-Code-Steuersignale über Leitungen (43) den Schaltpunkten der einzelnen Schaltkreisplättchen zugeführt werden.

3. Einrichtung nach Anspruch 1 oder 2, dadurch gekennzeichnet, daß die OP-Code-Steuersignale in Decodierschaltungen (50) auf dem Schaltkreisplättchen selbst erzeugt werden.

4. Einrichtung nach einem der Ansprüche 1 bis 3, dadurch gekennzeichnet, daß der gemeinsame Taktgeber (OSZ) über abgestimmte Leitungen (46) Taktsignale gleicher Phase an die T-Ringe der Schaltkreisplättchen abgibt.

5. Einrichtung nach einem der Ansprüche 1 bis 4, dadurch gekennzeichnet, daß die T-Ringe bei Beendigung der Ausführung einer Mikroinstruktion, die weniger als die maximal mögliche Anzahl von Zeitsignalen ($T_i$) erfordert, durch ein Rückstellsignal (RS) in den Zustand des letzten ($T_L$) der maximal möglichen Zeitabschnitte überführt werden.

6. Einrichtung nach einem der Ansprüche 1 bis 5, dadurch gekennzeichnet, daß eine lokale Verknüpfungsschaltung (52) aus mindestens zwei lokal erzeugten Zeitsignalen ($T_i$) und OP-Code-Steuersignalen Taktsteuersignale (komplexe Taktsteuersignale) erzeugt.

7. Einrichtung nach einem der Ansprüche 1 bis 6, dadurch gekennzeichnet, daß ausgewählten Schaltgliedern mit komplexen Taktsteuersignalen (z. B. verriegelnde Registerstufe vom Typ D-Flipflop; Fig. 5) mehrere einzelne Zeitsignale zusammen mit zugehörigen OP-Code-Steuersignalen zugeführt werden, daß für jedes Signalpaar Zeitsignal-Steuersignal ein Eingangsglied (z. B. UND-Glieder 20', 20a) vorgesehen ist und daß die Ausgänge der Eingangsglieder zusammengeführt sind (z. B. Phantom-ODER-Verknüpfung).

## Claims

1. Apparatus for generating signals for the time control (clock control signals) of synchronously operating digital sequential circuits, having a plurality of circuit chips, by combining the output signals of a time signal generator (T-ring) with signals containing instruction information, characterized in that in a circuit, serving to execute micro instructions, several or all circuit chips (41; Fig. 4) each have their own T-ring (42) for generating local time signals, wherein all T-rings are synchronously operated by a common clock generator (OSZ), and that the time signals of the appertaining local T-ring as well as control signals, obtained by decoding the OP-code of the micro instruction (OP-code control signals), are applied to the switching points (e. g., register 45) of a circuit chip.

2. Apparatus according to claim 1, characterized in that decoding of the operation code of the micro instruction is effected at a central point (44) of the processing system, and the OP-code contraol signals are fed through lines (43) to the switching points of the individual circuit chips.

3. Apparatus according to claim 1 or 2, characterized in that the OP-code control signals are generated in decoding circuits (50) on the circuit chip proper.

4. Apparatus according to any one of the claims 1 to 3, characterized in that the common clock generator (OSZ), through matched lines (46), applies clock signals of the same phase to the T-rings of the circuit chips.

5. Apparatus according to any one of the claims 1 to 4, characterized in that upon completion of a micro instruction requiring fewer than the maximum possible number of time

signals $T_i$, the T-rings are set by means of a resetting signal (RS) to the state of the last ($T_L$) of the maximum number ot time intervals possible.

6. Apparatus according to any one of the claims 1 to 5, characterized in that a local logic circuit (52) generates clock control signals (complex clock control signals) from at least two locally generated time signals ($T_i$) and OP-code control signals.

7. Apparatus according to any one of the claims 1 to 6, characterized in that several individual time signals together with the appertaining OP-code control signals are fed to selected switching elements with complex clock control signals (e. g., the latching register stage of the D-type flip-flop; Fig. 5), that one input element (e. g., AND gates 20', 20a) is provided for each signal pair (time signal/control signal), and that the outputs of the input elements are combined (e. g., by dot ORing).

**Revendications**

1. Dispositif pour la génération de signaux pour la commande temporelle (signaux de commande de chronologie) de circuits séquentiels digitaux fonctionnant de façon synchrone, comportant plusieurs microplaquettes à circuits, combinant le signal de sortie d'un générateur de signaux de chronologie (anneau en T) avec des signaux contenant des données de commande; caracterisé en ce que, dans un circuit servant à exécuter des micro-instructions, toutes les microplaquettes à circuits, ou plusieurs d'entre-elles (41; figure 4) comportent chacune un anneau en T propre (42) pour générer des signaux de chronologie locaux, tous les anneaux en T étant commandés de façon synchrone, par un générateur de chronologie (OSZ) commun, et en ce que les signaux de chronologie de l'anneau en T local associe, et les signaux de commande obtenus par décodage du code d'opération de la micro-instruction (signaux de commande du code d'opération) sont appliqués aux points de commutation (par exemple le registre 45) d'une microplaquette a circuits.

2. Dispositif selon la revendication 1, caracterisé en ce que le code d'opération de la micro-instruction est decodé à un point central (44) de l'unité de traitement, et en ce que les signaux de commande du code d'opération sont appliqués à travers des lignes (43) aux points de commutation des différentes microplaquettes à circuits.

3. Dispositif selon la revendication 1 ou 2, caractérisé en ce que les signaux de commande du code d'opération sont générés dans des circuits de décodage (50) à même les microplaquettes à circuits.

4. Dispositif selon l'une des revendications 1 à 3, caractérisé en ce que le générateur de chronologie commun (OSZ), fournit à travers des lignes accordées (46), des signaux de chronologie de même phase aux anneaux en T des microplaquettes à circuits.

5. Dispositif selon l'une des revendications 1 à 4, caractérisé en ce que les anneaux en T, à la fin de l'exécution d'une micro-instruction demandant un nombre de signaux de chronologie (Ti) qui est inférieur au nombre maximum possible, sont conditionnés par un signal de restauration (RS) à l'etat correspondant au dernier intervalle de temps (TL) du nombre maximum d'intervalles possibles.

6. Dispositif selon l'une des revendications 1 à 5, caractérisé en ce qu'un circuit logique local (52) génère, à partir d'au moins deux signaux de chronologie (Ti) obtenus localement et de signaux de commande du code d'opération, des signaux de commande de chronologie (signaux de commande de chronologie complexe).

7. Dispositif selon l'une des revendications 1 à 6, caractérisé en ce que des éléments de commutation selectionnés reçoivent par des signaux de commande de chronologie complexes (par exemple l'étage de registre verrouillant de la bascule du type D; figure 5) plusieurs signaux de chronologie individuels avec les signaux de commande associés du code d'opération, en ce que un élément d'entrée (par exemple éléments ET 20', 20a) est prévu pour chaque paire de signaux, c'est-à-dire signal de chronologie — signal de commande, et en ce que les sorties des éléments d'entrée sont réunies (par exemple fonction logique OU câblée directement).

# FIG. 1A

# FIG. 1B

| | $T_L$ | $T_0$ | $T_1$ | $T_2$ | $T_3$ | $T_4$ | $T_5$ | $T_6 = T_L$ |
|---|---|---|---|---|---|---|---|---|

TAKT A

OP-REG SETZEN $\quad$ $TS_L$ $\qquad$ $TS_L$

OP1 NACH DLSAR $\quad$ $TS_0$

DLS NACH A-REG $\quad$ $TS_1$

OP2 NACH DLSAR $\quad$ $TS_2$

DLS NACH B-REG $\quad$ $TS_3$

ALU $\quad$ $TS_4 + TS_5$

DLIR SETZEN $\quad$ $TS_5$

BEDGS-CODE SETZEN $\quad$ $TS_5$

DLIR NACH DLS $\quad$ $TS_6 = TS_L$

INSTRUKTION

# FIG. 2

−TAKT A

DATEN

+TS

1 — 24

& — 20

& — 23

+S

& — 21

−RS — 25

1 — 22

# FIG. 3A

TS_0 = $TS_0$
TS_0+TS_2 = $TS_0 + TS_2$
TS_1 = $TS_1$
TS_2 = $TS_2$
TS_2+TS_L = $TS_2 + TS_L$
TS_L = $TS_L$

0179

## FIG. 3B

TAKT A

TAKT B

AUSG.-SIGNAL M1 — M1

AUSG.-SIGNAL S1 — T1

M2

T2

ML

TL

TAKT A BEI VER-BRAUCHER — 35

TAKTSTEUERSIGNAL BEI VERBRAUCHER — TS$_1$

Δ

## FIG. 5

20a

T$_2$

DECODE 2

&

24'

−TAKT A

DATEN

1

&

25

T$_1$

DECODE 1

20'

+S

&

23'

1

22'

−RS

&

21'

15

# FIG. 4